Europäisches Patentamt

(19) European Patent Office

Office européen des brevets

(11) Publication number : **0 437 938 A2**

# (12) EUROPEAN PATENT APPLICATION

(21) Application number : 90313221.5

(22) Date of filing : 05.12.90

(51) Int. Cl.⁵ : **G11B 5/41**

(30) Priority : 12.12.89 GB 8928103

(43) Date of publication of application :
24.07.91 Bulletin 91/30

(84) Designated Contracting States :
**DE FR GB**

(71) Applicant : **AUTOMATION FACILITIES
LIMITED
Blakes Road
Wargrave, Berkshire RG10 8AW (GB)**

(72) Inventor : **Gutch, Christopher John Worsley
Corner Cottage, Burchetts Green
Maidenhead, Berkshire, SL6 6QS (GB)**
Inventor : **Birney, James
44 Orchard Avenue
Sonning Common, Nr. Reading, RG4 9LT (GB)**

(74) Representative : **Harland, Linda Jane et al
c/o Reddie & Grose 16 Theobalds Road
London WC1X 8PL (GB)**

(54) **Cleaning device.**

(57) A cleaning device (10) for cleaning a card-reading head comprises a substrate (12) which has on both its planar surfaces a cleaning layer (14, 16) of non-woven material. AT least one magnetisable portion (18) overlays the cleaning layer and is magnetically encoded with a signal effective to draw the cleaning device (10) into a position in which at least one cleaning layer (14, 16) contacts the card reading head.

FIG. 1

EP 0 437 938 A2

# CLEANING DEVICE

The present invention relates to a device for cleaning magnetic data reading heads, in particular, to a cleaning device for a magnetic reading head adapted to read data from a magnetically-encoded card and accessible through a card-receiving aperture, the cleaning device comprising a strubstrate member for insertion into the card-receiving aperture. Such magnetic data reading heads are widely-used, for example, in cash-dispensing machines, for authorising credit on credit card accounts, in pay-telephone aparatus, and in security systems, in vending machines and in automatic ticket barriers.

For clarity, it is hereby stated that the term "card" as used in this specification is not intended to be restricted to items of paper or cardboard but is intended to cover any generally planar member of relatively stiff material.

The efficiency of card-reading heads is just as prone to be impaired by the presence of dirt as that of data-reading heads used in other applications. However, the cleaning of card-reading heads tends to be particularly difficult because such heads are frequently mounted behind a card-receiving aperture or slot. The heads are, consequently, relatively inaccessible. In some instances, to obtain access to a card-reading head, it may be necessary to at least partially dismantle the apparatus in which it is incorporated in order to effect cleaning. This is not only inconvenient and time-consumming but may also require the apparatus in question to be out of service for considerable periods of time.

In accordance with a first aspect of the invention, the cleaning device is characterised in that the substrate has on both planar surfaces thereof a cleaning layer; and at least one magnetisable portion overlying a cleaning layer for receiving coded data. Preferably, the cleaning layers are formed from sheets of cleaning material secured to the planar surfaces by application of heat. The strubstrate may conveniently be a laminate comprising a layer of polyester between two layers of polythene.

This construction permits the cleaning of the transport rollers or other mecanism which serves to draw the cleaning device into contact with the data reading head simultaneously with cleaning of the head itself. Furthermore, the fact that the laminate formed by the substrate and cleaning layers has a symmetrical cross-section means that the device is more likely to be flat and less likely to be curved, as may be the case with assymetrical laminates.

In accordance with a further aspect of the invention, there is provided a method of manufacturing such a cleaning device characterised in that it comprises providing a substantially rigid substrate sheet having a cleaning layer on both planar surfaces thereof, cutting from the sheet one or more cleaning devices shaped for insertion through the card receiving aperture to contact the data reading head, and securing a magnetisable layer over a portion of a cleaning layer.

A cleaning device and a method of manufacture thereof in accordance with the invention will now be described in detail, by way of example only, with reference to the drawings in which : -

Figure 1 is a plan view of a cleaning device in accordance with the invention ; and

Figure 2 is a section on the line II-II through the cleaning device of Figure 1.

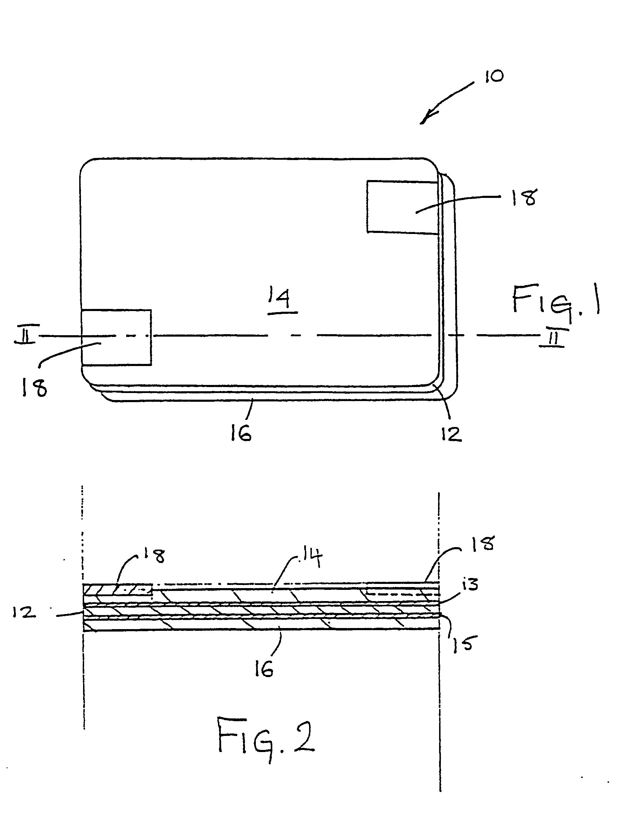

The cleaning device shown in **Figures 1 and 2** is in the form of a card-like member 10 formed from a laminate of three layers, 12, 14 and 16. The central layer or substrate 12 is substantially rigid, and may, as is shown in Figure 2, itself consist of a laminate of three layers ; a layer 13 of relatively rigid biaxially oriented polyester film, such as the product sold under the trade mark "Melinex" by ICI Plc, between two layers of polythene 15. The layers of polythene 15 are extruded or laminated with adhesive onto the rigid polyester 13. The outer layers 14 of the laminate are layers of non-woven fabric which is secured to the substantially rigid substrate 12 by heat bonding which causes the polythene layers 15 on the substrate to weld the cleaning layers 14 to the planar surfaces of the substrate 12. Preferably, the layer 14 is formed from, for example, a lint-free fabric such as spun-bonded polyester containing no fillers of binders which might be dissolved in a cleaning solvent applied to the device and then deposited on the data reading head during cleaning.

The total thickness of the laminate may be chosen to be within the tolerances laid down by International Standards relating to the application, for example, I.S.O. 7810 for bankers and credit cards, (identification cards) if appropriate.

Once the laminate has been formed from the layers 12 and 14, a plurality of card-like members 10 are cut from it. These may be of a size corresponding to that of a credit or bankers' card as dictated by the standard referred to above. Thus, in accordance with the standard, the card-like members 10 may measure approximatively 85.275 mm x 53.975 mm (3.375" x 2.125").

Card reading apparatus generally falls into one of two different types. The card may be moved to be adjacent the data-reading head by purely mechanical means, for example, pressure applied by the user or by a mechanism actuated by the engagement of the edge of the card with a switch as it is inserted into the card-receiving aperture of the apparatus. Alternatively, the mechanism for correctly locating the card adjacent the data-reading head may be operated in dependence on data magnetically encoded on the card itself.

In order that the cleaning device of the invention may be used in this latter type of card reading apparatus, magnetisable regions 18 are formed on the card-like member 10 by hot foil stamping onto the cleaning layer 14. That is to say, a tool is brought down onto a strip of Mylar tape (biaxially oriented polyester film sold by DuPont) bearing a magnetisable coating to bring the tape onto the cleaning layer 14. The tool applies heat and pressure to bond the coating to the non-woven fabric of the cleaning layer 14 transferring it from the Mylar backing tape. The magnetisable areas 18 are then encoded using an appropriate machine.

As will be seen most clearly from Figure 1, two magnetisable patches 18 of are formed at diagonally-opposite corners of the card-like member 10. Once encoded with the appropriate data, the positioning of the two magnetisable patches 18 ensures that the device will be drawn into the card reading apparatus irrespective of which of the two possible orientations it is presented to the card-reading apparatus in. Each of the two magnetisable patches 18 is encoded with a "start sentinel" code and "clock" marks which are of the same type as those borne by cards for use in the card reading apparatus. These signals ensure that the cleaning device is properly positioned with the layer of cleaning material 14 engaging the data reading head.

Other arrangements of magnetisable patches 18 may be appropriate where the device is for use in cleaning data reading heads other than in cash-dispensing machines.

In use, the cleaning device is simply inserted into the card-receiving aperture of the card actuated apparatus and is mechanically positioned adjacent the reading head in precisely the same way that a card inserted to actuate the machine would be. In this position, the layer of non-woven cleaning material 14 contacts the head to clean it as the head tries to read the card. The cleaning device can then be withdrawn in the same manner as would a normal actuating card. The cleaning layer 14 is preferably wetted with a cleaning liquid before use. This may be achieved by use of an aerosol spray or a dropper bottle or by encapsulating the card in a sealed packet or sachet containing cleaning liquid.

As the card 10 is moved into and out of the card receiving aperture, the cleaning layer 16 moves over the transport rollers or other mechanism used to move the card into and out of the aperture so that these are cleaned simultaneously with the data reading head.

The invention thus provides a cleaning device for use with magnetic data reading heads in card reading apparatus which can be manufactured by easily-implemented methods and which enables such data reading heads to be cleaned easily and without requiring dismantling of the apparatus into which the heads are incorporated. At the same time, cleaning of the transport mechanism opposite the data reading head is effected by cleaning layer 16.

## Claims

1. A cleaning device (10) for a magnetic data reading head adapted to read data from a magnetically-encoded card and accessible through a card-receiving aperture, the cleaning device (10) comprising a substrate member (12) for insertion into the card-receiving aperture and being characterised in that the substrate member (12) has on both planar surfaces thereof a cleaning layer (14, 16) ; and at least one magnetisable portion (18) overlying a cleaning layer (14, 16) for receiving coded data.

2. Apparatus according to claim 1 in which the substrate member (12) is of material such that its planar surfaces form the cleaning layers (14, 16).

3. Apparatus according to claim 1 in which the cleaning layers (14, 16) are formed from sheets of cleaning material secured to the planar surfaces of the substrate member (12).

4. Apparatus according to claim 3 in which the cleaning material (14, 16) is secured to the substrate by application of heat.

5. Apparatus according to claim 3 or 4 in which the substrate member (12) is a laminate comprising a layer (13) of polyester disposed between two polythene layers (15).

6. A device according to any precceding claim in which the magnetisable portion (18) or portions are formed by hot foil stamping.

7. A device according to claim 6 in which the magnetisable portion (18) includes a region magnetically-encoded with a signal effective to actuate a mechanism associated with a magnetic data reading head to draw the cleaning device into a position in which a cleaning layer (14, 16) contacts the data reading head.

8. A device according to any preceding claim in which the cleaning layers (14, 16) are one of non-woven fabric.

9. A method of manufacturing a cleaning device (10) for a magnetic data reading head adapted to read data from a magnetically encoded card and accessible through a card receiving aperture, the method being characterised in that it comprises providing a substantially rigid substrate sheet (12) having a cleaning layer (14, 16) on both planar surfaces thereof, cutting from the sheet one or more cleaning devices (10) shaped for insertion through the card receiving aperture to contact the data reading head, and securing a magnetisable layer (18) over a portion of a cleaning layer (14, 16).

10. A method according to claim 9 in which the substrate sheet (12) is of material such that its planar surfaces form the cleaning layers (14, 16).

11. A method according to claim 9 in which the cleaning layers (14, 16) are formed from sheets of cleaning material secured to the planar surfaces of the substrate sheet (12).

12. A method according to claim 11 in which the cleaning material (14, 16) is secured to the substrate sheet (12) by application of heat.

13. A method according to claim 11 or 12 in which the substrate sheet (12) is a laminate comprising a layer of polyester (13) disposed between two polythene layers (15).

14. A method according to any of claims 9 to 13 in which the magnetisable layer is secured to the cleaning layer (14, 16) by hot foil stamping.

15. A method according to any of claims 9 to 14 in which a region of the magnetisable portion (18) is magnetically-encoded with a signal effective to actuate a mechanism associated with the data reading head to draw the cleaning device (10) into a position in which the cleaning layer (14, 16) contacts the data reading head.

16. A method according to any of claim 9 to 15 in which a region of the magnetisable portion (18) is magnetically encoded with a signal detectable by means associated with the data reading head to indicate that the cleaning device is positioned so that the cleaning layer (14, 16) is in contact with the data reading head.

17. A method according to any of claim 9 to 16 in which the cleaning layers (14, 16) are of non-woven fabric.

Fig. 1

Fig. 2